# EUROPEAN PATENT SPECIFICATION

(11) **EP 0 410 814 B1**
(45) Date of publication and mention of the grant of the patent: **13.09.1995**
(21) Application number: 90308325.1
(22) Date of filing: 30.07.1990
(51) Int. Cl.: B60N 2/12

(54) **Automotive seat with walk-in mechanism**
Kraftfahrzeugsitz mit einem Mechanismus zum Erleichtern des Zugangs
Siège d'automobile à mécanisme facilitant l'entrée

(30) Priority: 28.07.1989 JP 195605/89; 28.07.1989 JP 195606/89; 28.07.1989 JP 88786/89
(43) Date of publication of application: 30.01.1991
(73) Proprietor: FUJI KIKO COMPANY LIMITED, Tokyo (JP)
(72) Inventor: Ikegaya, Isao, C/o Fuji Kiko Company Ltd., Kasai-shi, Shizuoka-ken (JP); Sugimoto, Kunihisa, C/o Fuji Kiko Company Ltd., Kasai-shi, Shizuoka-ken (JP); Kinoshita, Takao, C/o Fuji Kiko Company Ltd., Kasai-shi, Shizuoka-ken (JP); Nakamura, Shinya, C/o Fuji Kiko Company Ltd., Kasai-shi, Shizuoka-ken (JP)
(74) Representative: Blanco White, Henry Nicholas

(56) References cited:
- DE-A- 2 317 926
- DE-A- 2 738 599
- GB-A- 2 091 548
- 111ENT ABSTRACTS OF JAPAN, vol. 11, no. 213 (M-605)[2660], 10th July 1987 & JP-A-62 29 440 (FUJI KIKO) 7th February 1987
- PATENT ABSTRACTS OF JAPAN, vol. 6, no. 236 (M-173)[1114], 25th November 1982;& JP-A-57 134 340 (AISIN SEIKI) 19th August 1982

## Description

### BACKGROUND OF THE INVENTION

### Field of the Invention

The present invention relates generally to a seat structure for an automotive vehicle. More specifically, the invention relates to an automotive seat structure with a walk-in mechanism for frontwardly inclining a seat back and, simultaneously, shifting the seat frontwardly for providing a clearance for passing into a rear seat. Further particularly, the invention relates to an automotive seat structure which can fold the seat back beyond the frontwardly inclined position for orienting the back side of the seat back substantially in horizontal so that the back side of the seat back can be used as a table. Additionally, the invention relates to a seat structure which is particularly adapted for a cab-over type wagon, or mini-bus having front, center and rear seats.

### Description of the Background Art

Japanese Patent First (unexamined) Publication (Tokkai) Showa **62-29440** disclose an automotive seat, particularly adapted for cab-over type wagon. The disclosed seat is particularly designed as center or intermediate seat in particular type of wagon having front, center or intermediate and rear seats. The seat has a seat back to be inclined frontwardly. Also, the seat is slidable frontwardly when the seat back is inclined so as to provide a passage for rear seat passengers to pass therethrough. Such mechanism is per se known as walk-in mechanism.

The above-identified prior proposed invention further proposes the seat which has a seat back being capable of further inclined so that the back side of the seat back can be oriented substantially in horizontal. Such seat back position may be hereafter referred to as "folded position". At the folded position, the back side oriented substantially horizontally may serve for placing luggage, or, in the alternative, for use as a table.

In such an automotive seat, it is essential to maintain a satisfactorily high level of safety. Therefore, in the case of the automotive seat with walk-in mechanism, it has to be assured that as assist lever for operating a walk-in lever is strong enough that the walk-in mechanism will never be operated into the walk-in position unintentionally. This requirement necessarily makes the assist lever bulky. Also, since the walk-in lever is oriented above the slide lock lever, the vertical dimension becomes necessary for facilitating this walk-in lever.

DE-A-2 738 599, on which the preambles of the independent claims are based, discloses a hinge fitting for a vehicle seat with a seat bracket bolted to the seat cushion, a link or middle member pivoted to the seat bracket, and a back rest bracket fixed to the seat back and pivoted to the link member. The link member is pivoted relative to the seat bracket to adjust the angle of the seat back, and the back rest bracket is pivoted relative to the link member to fold the seat back flat forwards. A connecting member pivoted to the link member engages both the seat bracket and the back rest bracket to lock the seat into position. Rotation of an operating lever causes a cam to raise the link member vertically, disengaging the connecting member and enabling the seat back to be pivoted as desired.

DE-A-2 317 926 discloses a seat that can be tipped up as a whole. A latch is released by operating a foot pedal, either in front of or behind the seat.

The invention provides a hinge structure for an automotive seat which is operable for selecting a seat back reclining position for said seat at a first position, for inclining forwardly for providing space for a passenger to pass thereby at a second position, and for orienting said seat back substantially horizontally at a third position, said hinge structure comprising: a base plate secured to a seat cushion of said automotive seat; a lower arm pivotally mounted on said base plate; an upper arm secured to said seat back and pivotably connected to said lower arm; and latch means pivotally mounted on said lower arm and engageable with said upper arm and said base plate; characterised in that said latch means comprises an upper latch pivotally mounted on said lower arm and engageable with said upper arm, a lower latch engageable between said base plate and said lower arm, and a link cooperably connecting said upper and lower latches; and in that an elastic member is mounted on said upper latch for elastic contact with said upper arm.

The invention also provides an automotive seat assembly including a seat cushion and a seat back, said seat back being operable for selection of a seat back reclining angle in a first position, for forward inclination for allowing passenger access in a second position, and for being oriented in fully forward, substantially horizontal position in a third position, said seat assembly comprising: a base plate fixed to said seat cushion; a lower arm pivotably supported on said base plate; an operation lever; an upper arm rigidly fixed to a seat back of said seat; a locking pin extending from one end of said upper arm; and a catching lever pivotably mounted on said lower arm and releasably engaging with said locking pin of said upper arm; characterised by said lower arm being biased in a predetermined pivotal direction by a spring; said operation lever being provided for pivotal movement with said lower arm; by a tooth member cooperable with said operation lever for releasably establishing locking engagement with said lower arm; a swing lever for pivotally moving said tooth member for establishing and releasing locking engagement with said lower arm; and a link lever associated with said catching lever for causing pivotal movement thereof, said link lever being cooperably connected to said swing lever.

Preferably, the automotive seat structure further comprises an elastic member associated with the upper arm for elastically biasing the upper arm for eliminating free movement of the second arm due to play. Also, the automotive seat structure may comprise a walk-in mechanism including seat sliding means for shifting said seat back and forth, said walk-in mechanism including a seat lock mechanism for locking said seat sliding means, said walk-in mechanism including a walk-in lever associated with said operation lever for synchronizing release of said seat lock mechanism locking said seat sliding means with manual operation of said operation lever for moving said seat back to said second position.

The present invention will be understood more fully from the detailed description given herebelow and from the accompanying drawings of the preferred embodiments of the invention, which, however, should not be taken to limit the invention to the specific embodiments but are for explanation and understanding only.

In the drawings:
**Fig. 1** is a perspective illustration of an automotive seat for which the preferred embodiment of a seat structure according to the present invention is applicable;
**Fig.2** is a side elevation showing the major part of the first embodiment of an automotive seat structure according to the present invention;
**Fig. 3** is a front elevation of the major part of the first embodiment of the automotive seat structure according to the invention;
**Fig. 4** is a perspective view of a seat slide construction employed in the first embodiment of the automotive seat structure;
**Figs. 5** and **6** are side elevation showing variety of seat positions to be implemented by the first embodiment of the automotive seat structure of **Figs. 1** through **4**;
**Fig. 7** is a slide elevation similar to **Fig. 1** but showing the major part of the second embodiment of the automotive seat structure according to the invention;
**Fig. 8** is a front elevation of the seat mechanism of **Fig. 7**;
**Fig. 9** is a side elevation similar to **Fig. 7** but showing the automotive seat structure operated in variety of positions;
**Fig. 10** is a side elevation of the preferred construction of a seat back hing employed in the preferred embodiment of the seat structure;
**Fig. 11** is a front elevation of the seat back hinge of **Fig. 10**;
**Fig. 12** is an enlarged section of the major part of the seat back hinge of **Figs. 10** and **11**; and
**Fig. 13** is a side elevatiation showing operation of the preferred construction of seat back hinge.

### DESCRIPTION OF THE PREFERRED EMBODIMENT

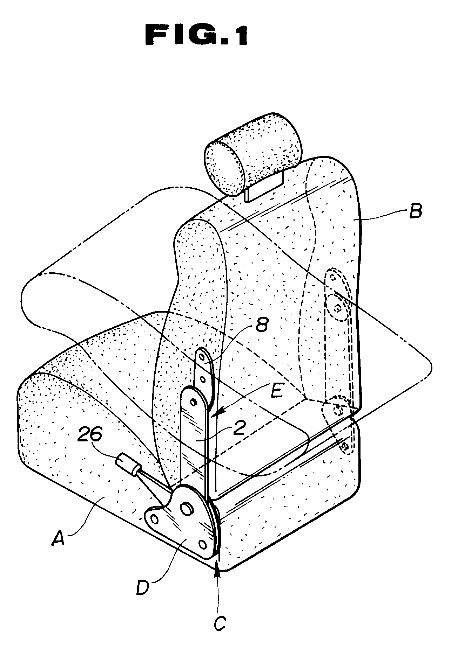

Referring now to the drawings, particularly to **Fig. 1**, the preferred embodiment of an automotive seat, according to the present invention, has a seat cushion **A** and a seat back **B** pivotably adjoined with the rear end of the seat cushion. A seat back adjusting mechanism **C** is provided between the seat cushion **A** and the seat back **B** for pivotally adjusting seat back position relative to the seat cushion. The seat back adjusting mechanism **C** includes a seat back reclining mechanism **D** for adjusting seat back angular position backward from a predetermined neutral position, and a walk-in seat back adjusting mechanism for permitting the seat back **B** to be tilted frontwardly from the neutral position. The seat back adjusting mechanism **C** further includes a double arm structure **E** for permitting the seat back **B** to be folded into a folded position, in which the back side of the seat back **B** is oriented substantially in horizontal as shown by phantom line. At the folded position, the back side of the seat back **B** can be used as table or luggage shelf for placing drink, food, luggage and so forth. The double arm structure **E** generally comprises a lower arm **2** and an upper arm **8** which is connected to the upper end of the lower arm in pivotal fashion. The lower arm **2** is associated with a seat back reclining mechanism **D** fixed on the rear end of a seat cushion frame which is not shown. On the other hand, the upper arm **8** is rigidly secured on a seat cushion frame which is not shown.

The lower and upper arms **2** and **8** are normally locked for serving as an integrally formed arm. The upper arm **8** is pivotable with carrying the seat back **B** for placing the seat back to the folded position.

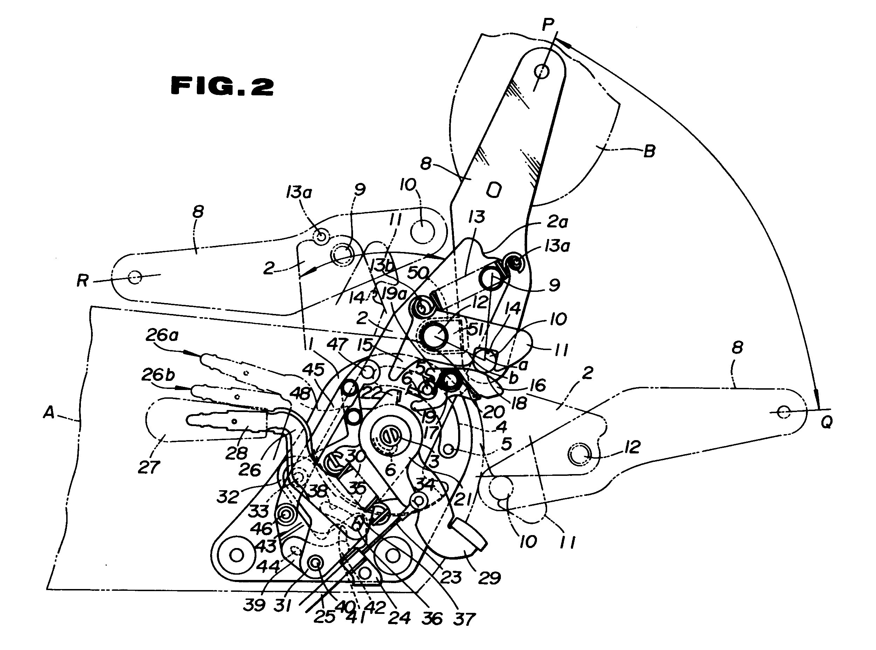

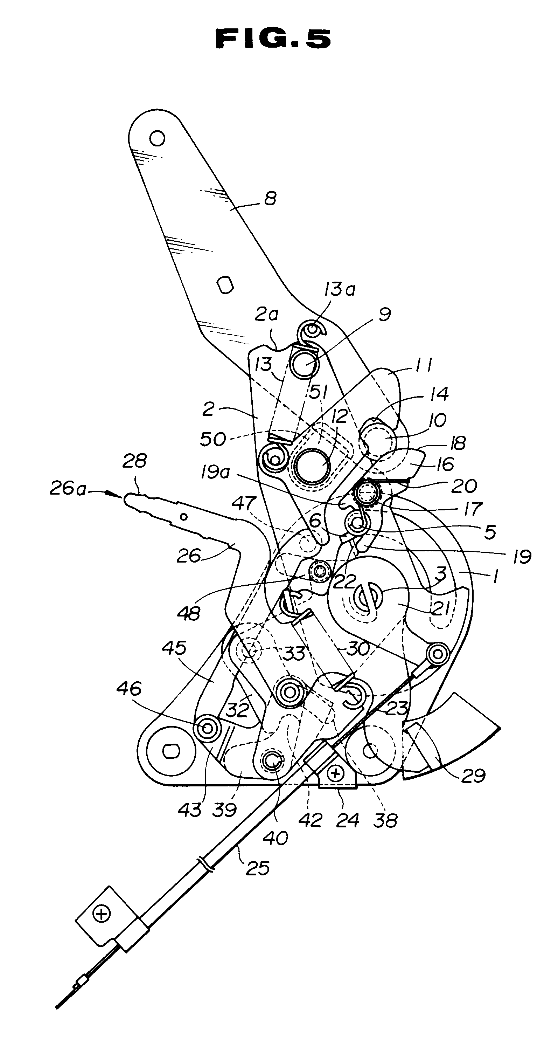

The preferred embodiments of the automotive seat structure according to the present invention will be discussed in greater detail herebelow with reference to **Figs. 2** through **13**.

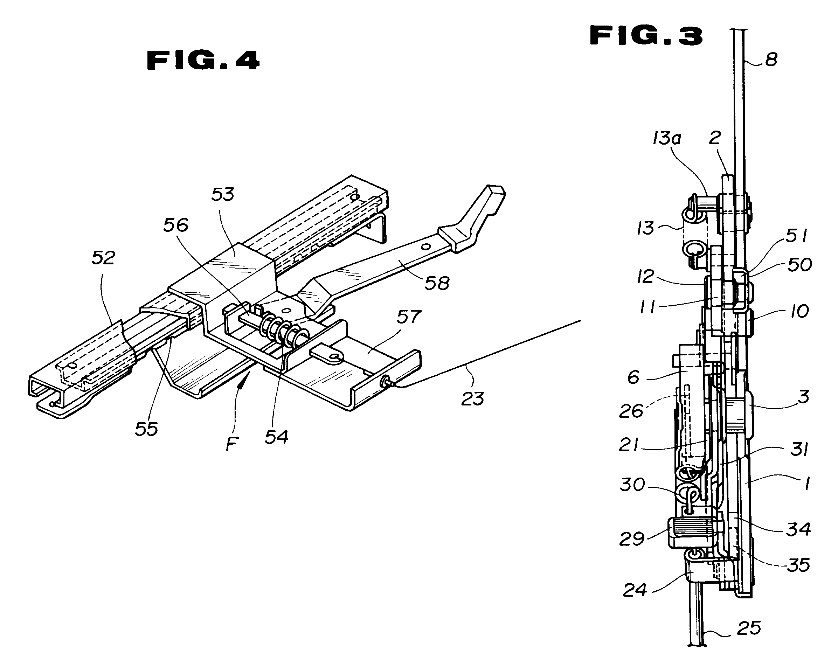

Referring to **Figs. 2** and **3**, a base plate **1** is rigidly secured onto the seat cushion frame supporting seat cushion **A**. The lower arm **2** is pivotable about a pivot shaft **3** which extends from the base plate **1**. An arc shaped slot **4** is formed through the base plate **1**, through which a pin **5** projected from the lower arm **2** extends. Therefore, the pivotal movement of the lower arm **2** is guided and restricted by the arc shaped slot **4**. A spiral spring **6** is provided between the pivot shaft **3** and the pin **5** so as to normally bias the lower arm **2** in couterclockwise direction in **Fig. 2**. The upper arm **8** is pivotably connected to the upper end of the lower arm **2** for pivotal movement about a pivot **9**. The upper arm **8** has a locking pin **10** in the vicinity of the lower end thereof. The locking pin **10** is engageable with a catching lever **11** which is pivotable about a pivot **12**. The catching lever **11** is normally biased in clockwise direction in **Fig. 2** by means of a coil spring **13** which has one end connected to a projection **13a** projecting from the upper arm **8** and a projection **13b** projecting from the catching lever **11**. The catching lever **11** defines a locking pin receptable recess **14** for establishing locking engagement between the locking pin **10** and the catching lever **11**. The catching lever **11** is integrally formed with a lever section **15** which is oriented substantially perpendicular to the major section.

A lock release lever **16** is pivotable about a shaft **17** and oriented in the vicinity of the catching lever **11** so that the lever may contact with the locking pin **10**. The lock release lever **16** has an upper edge **18** where it contact with the locking pin **10** and formed into arc shaped configuration. The lock release lever **16** has a bifurcated legs **19** and **19a**. The lock release lever **16** is biased in counterclockwise direction by means of a torsional spring **20**.

The leg **19a** of the lock release lever **16** is associated with a walk-in lever **21** is pivotally supported by the pivot **3** for pivotal movement thereabout. The walk-in lever **21** has an integrally formed actuation lever section **22** which is oriented in opposition to the leg **19** of the lock release lever **16**. The walk-in lever **21** is connected to an actuation wire **23** which extends through a flexible guide tube **25**, end of which is secured to the seat cushion frame by means of a fastening bracket **24**. Through the actuation wire **23**, the walk-in lever **21** is connected to a walk-in mechanism **F**.

An operation lever **26** is pivotable about the shaft **3**. The operation lever **26** has a lever section **28** which has one end mounted thereon a manual grouper handle **27**. The operation lever **26** is also provided with a foot pedal **29**. A return spring **30** is provided between the operation lever **26** and a holder plate **31** for biasing the operation lever in counterclockwise direction in **Fig. 2**. A tooth member **32** is disposed between the base plate **1** and the holder plate **31** and pivotable about a pivot **33**. The tooth member **32** has a locking tooth **35**. The locking tooth **35** is designed for engagement with a locking tooth **34** formed on the outer periphery of the lower arm **2**. A pin **36** extends from a swing lever **43** and extends through an elongated opening **38** formed through the holder plate **31**. Furthermore, the pin **36** extends through an elongated opening **37** of the operation lever **26**. A cam member **39** is provided for pivotal movement about a shaft **40** on the base plate **1**. The cam member **39** is formed a leg **42** which is engageable with a recess **41** of the tooth member **32**. The swing lever **43** is connected with the cam member **39** via an emboss section **44** to be formed into crank shaped configuration as assembled together with the cam member **39**. The swing lever **43** is pivotable about a pivot **40** together with the cam member **39**. The pin **36** which extends though the elongated opening **37** is extended from the swing lever **43**.

A link lever **45** is connected to the swing lever **43** via a connecting pin **46** at one end and has a contact pin **47** which contacts with the lever section **15** of the catching lever **11**. A link **48** is pivotally connected to the link lever **45** at one end and to the holder plate **31** at the other end.

A stationary damper housing **50** is secured on the lower arm **2**. The stationary damper housing **50** serves as stopper for the pivot **12** of the catching lever **11**. A rubber damper **51** is housed within the stationary damper housing **50**. The rubber damper **51** is frictionally engageable with the side face of the upper arm **8**. An axis **a** extending through the pivot **12** of the catching lever **11** and the locking pin **10**, and an axis **b** extending through the locking pin **10** and the pivot **9** of the upper arm **8** intersects to reach other with an angle smaller than or equal to 90°.

As shown in **Fig. 4**, the walk-in mechanism **F** includes a seat slide rail **52** including a stationary rail rigidly secured on the floor of the vehicular body and a movable rail. A bracket **53** is secured on the movable rail. The bracket **53** supports a locking lever **56** which is biased by means of a spring **54** for locking engagement with one of a plurality of locking holes **55** formed through the stationary rail. The actuation wire **23** is connected to the free end of the locking lever **56**. A guide bracket **57** is provided for guiding the wire **23** so that the wire can be arranged in alignment with the locking lever **56** at least at the end thereof.

In the operation of the aforementioned first embodiment of the automotive structure, the seat back reclining mechanism **E** can be operated through the operation lever **26**. Namely, by pulling up the operation lever **26** to the uppermost position **26a** in clockwise direction in **Fig. 1**, the swing lever **43** is pivotally moved about the pivot **40** via the pin **36**. According to pivotal movement of the swing lever **43** the cam member **39,** which is integrated with the swing lever and engages the leg **42** with the recess **41** of the tooth member **32**, pivotally moves to cause clockwise rotation of the tooth member **32** about the pivot **33**. By this pivotal movement, the locking engagement between the teeth **34** and **35** is released. By this, the lower arm **2** is permitted to pivot about the pivot **3**. At this position, the force of the spiral spring **6** becomes active for causing forward pivotal movement of the seat back **B**. However, since the spring force of the spiral spring **6** is not too strong, the seat back will stop moving forwards on contacting a seat occupant's back. On the other hand, by pushing the seat back **B** against the spring force, the occupant can tilt the seat back **B** rearwards to increase the reclining angle. When the operation lever **26** is released from its upward position, it is returned to the initial position by the spring force of the spring **30.** The pin **36** then causes clockwise pivotal movement of the swing lever **43**. As a result, the cam member **39** pivots in the clockwise direction to release the leg **42** from the recess **41** of the tooth member **32**. Therefore, the tooth member **32** pivots in the counterclockwise direction to cause engagement between the teeth **34** and **35**. Therefore, the lower arm **2** is locked at the selected position.

It should be appreciated that with the shown construction, the seat back reclining mechanism permits reclining adjustment between the neutral position **P** and a fully reclined position **Q**.

When the walk-in mechanism **F** is to be used, the operation lever **26** is pulled upwardly or the foot pedal **29** is operated. By this, the operation lever **26** is pivoted about the pivot **3** in clockwise direction. Accordingly, the locking engagement between the teeth **34** and **35** is release. Therefore, the lower arm **2** becomes free from the locking engagement. Therefore, the lower arm **2** is pivoted by means of the spiral spring **6**. As can be appreciated, since the walk-in mechanism **F** is operable in absence of the seat occupant, the lower arm **2** is inclined or tilted frontwardly. At the same time, the pin **5** is pivotally moved along the arc shaped elongated slot **4** of the lower arm **2**. In synchronism with the seat back tilting operation , the lever section **15** of the swing lever comes into contact with the link lever **47**. This causes slight pivotal movement of the catching lever **11** about the pivot **12** in counterclockwise direction. Therefore, incomplete locking between the locking pin receptacle recess **14** of the catching lever **11** and the locking pin **10** is established.

When the seat back **B** is inclined frontwardly, the leg **19** of the lock release lever **16** comes into contact with the leg **22** of the walk-in lever **21** to cause the latter to pivot about the pivot **3** in counterclosewise direction. By this, the actuation wire **32** is pulled for a predetermined direction to pull the locking lever **56** in lock releasing position for causing frontward shifting the movable rail with the seat structure.

On the other hand, when the seat back **B** is to be placed at the folded position for placing the back side of the seat back substantially in horizontal, the operation lever **26** is initially pulled up to the uppermost position **26a** as set forth above for causing frontward inclination. At this position, the link lever **45** is placed at a downwardly shifted position since it is depressed downwardly by the lever section **15** of the catching lever **11**. Subsequently, the operation lever **26** is operated to return into the half pulled-up position as represented by **26b**. By this, the swing lever **43** pivotally moves about the pivot **40** in clockwise direction. By this, the link lever **45** shifts upwardly to push the the lever section **15** of the catching lever **11** by the contacting pin **47**. As a result, the catching lever **11** is pivoted in the counterclockwise direction. Therefore, the locking pin **10** and the locking pin receptacle recess **14** of the catching lever **11**, which are placed in incomplete engagement state by initially pulling the operation lever **26** in uppermost position **26a**, are released. By this, the upper arm **8** becomes free to pivot about the pivot **9**.

With the shown construction, the catching lever **11** is designed for slight pivotal movement according to forward tilting movement of the lower arm 2 and maintain the angle between the axes **a** and **b** smaller than or equal to 90° , the locking pin **10** becomes easily released from locking engagement with the catching lever **11**. Therefore, despite the force exerted on the catching lever **11** for depressing the upper arm **8** onto the rubber damper **51**, the operational force required for releasing locking engagement between the locking pin **10** and the catching lever **11** becomes small.

By pushing the seat back **B** forwardly into the folded position, the upper arm **8** pivots about the pivot **9** in the counterclockwise direction. Then, a pin **13a** receiving one end of the coil spring **13** comes into engagement with the recess **2a** of the lower arm **2**. The engagement of the pin **13a** and the recess **2a**, in cooperation with the spring **13**, ensures that the seat back is maintained in the folded position **R**.

According to pivotal movement of the upper arm **8** as set forth above, the locking pin **10** is shifted off the guide edge **18** of the lock release lever **16** which pushes the lever section **22** of the walk-in lever **21**. As a result, the lock release lever **16** is pivoted about the pivot **17** by means of the spring **20** in counterclockwise direction to place the leg **19a** into contact with the pin **5**. As a result, the leg **19** is released from the lever section **22** of the walk-in lever **21**. Therefore, the walk-in lever **21** is forced into pivotal motion by the spring force of the spring **54** via the wire **23**, in clockwise direction. Therefore, the walk-in mechanism **D** is again placed into locking state. Therefore, the movable rail with the seat cushion is locked to the stationary lever at forwardly shifted position. Therefore, the seat placed at the folded position can be stably maintained.

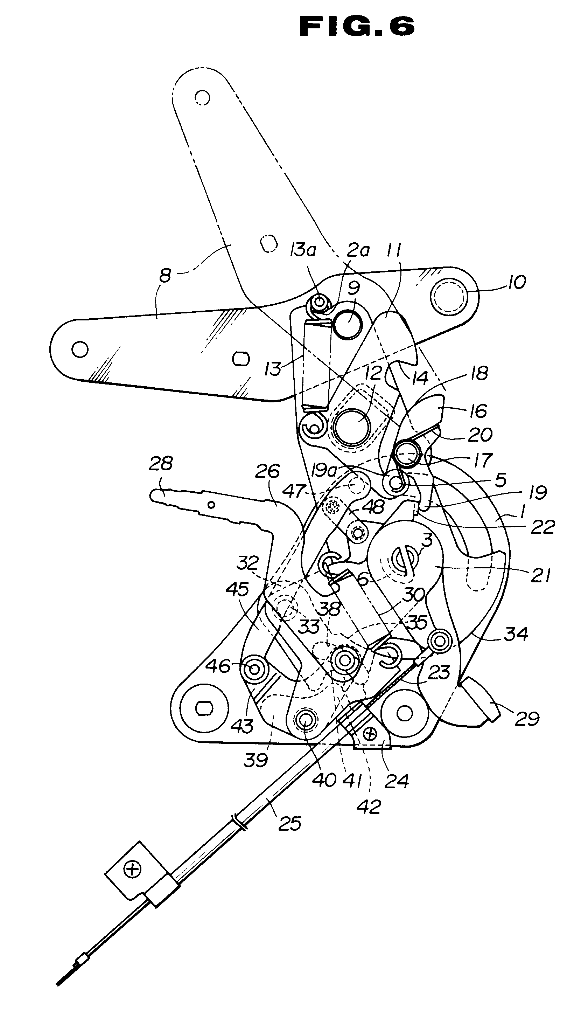

For returning the seat back **B** from the folded position to the normal position, the upper arm **8** with the seat back is pivoted clockwise, as shown in **Fig. 6**. The locking pin**10** comes into contact with the guide edge **18** of the lock release lever **16** to cause clockwise pivotal movement of the latter. Then, the leg **19** of the lock release lever **16** again pushes the leg **22** of the walk-in lever **21** for causing counterclockwise pivotal movement about the pivot **3** of the walk-in lever. By this, the actuation wire **23** is again pulled to release locking of the walk-in mechanism **C**. At the same time, the locking pin **10** comes into engagement with the locking pin receptacle recess **14** of the catching lever **11**. Furthermore, the side face of the upper arm **8** comes into contact with the rubber damper **51**. Also, the pin **13a** shifts from the recess **2a** for causing integrally locking of the lower and upper arms **2** and **8**.

Then, the movable rail of the seat slide **52** is shifted rearwardly on the stationary rail. Simultaneously, the tilt angle of the seat back **B** is adjusted to the desired position in the manner discussed with respect to the operation of the seat back reclining mechanism. As desired, the tooth **35** of the tooth member **32** and the tooth **34** of the lower arm **2** comes into engagement. Therefore, the seat back **B** is fixedly maintained at the selected angular position as illustrated by **P**.

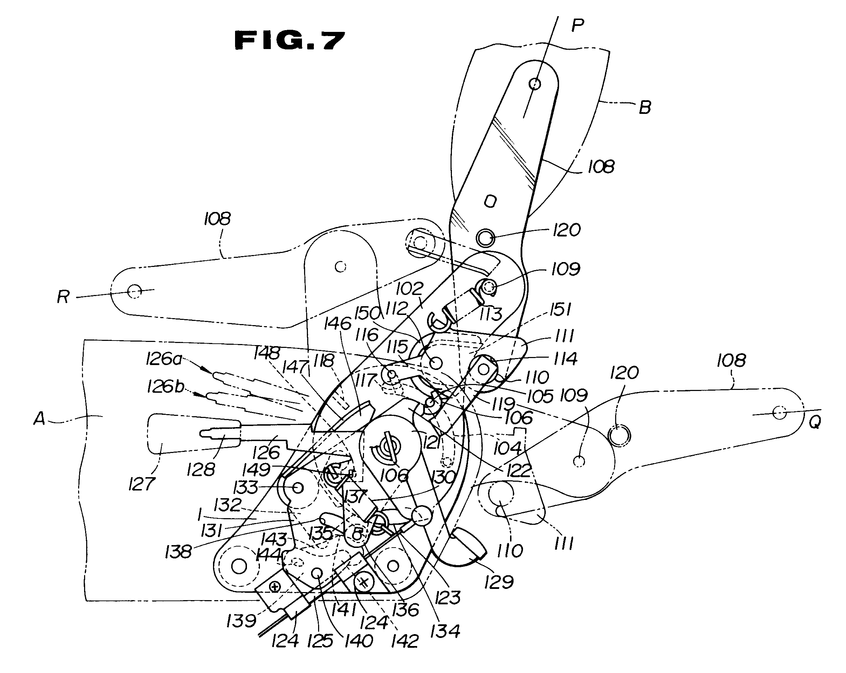

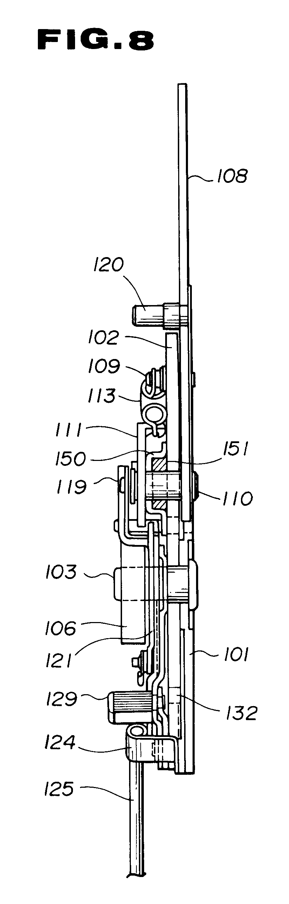

**Figs. 7** through **9** shows the second embodiment of the automotive seat structure, according to the present invention. As shown in **Figs. 7** and **8**, a base plate **101** is rigidly secured onto the seat cushion frame supporting seat cushion **A**. The lower arm **102** is pivotable about a pivot shaft **103** which extends from the base plate **101**. An arc shaped slot **104** is formed through the base plate **101**, through which a pin **105** projected from the lower arm **102** extends. Therefore, the pivotal movement of the lower arm **102** is guided and restricted by the arc shaped slot **104**. A spiral spring **106** is provided between the pivot shaft **103** and the pin **105** so as to normally bias the lower arm **102** counterclockwise in **Fig. 7**. The upper arm **108** is pivotably connected to the upper end of the lower arm **102** for pivotal movement about a pivot **109**. The upper arm **108** has a locking pin **110** in the vicinity of the lower end thereof. The locking pin **110** is engageable with a catching lever **111** which is pivotable about a pivot **112**. The catching lever **111** is normally biased in the clockwise direction in **Fig. 7** by means of a coil spring **113** which has one end connected to a projection **109** projecting from the upper arm **108** and a projection **113b** projecting from the catching lever **111**. The catching lever **111** defines a locking pin receptable recess **114** for establishing locking engagement between the locking pin **110** and the catching lever **111**. The catching lever **111** is integrally formed with a lever section **115** which is oriented substantially perpendicular to the major section.

The lever section **115** is formed with a pin **116**. The pin **116** is engageable with an elongated arc shaped opening **117** having arc radius centered at the pivot **112** of the lower arm **102**. When the lower arm **102** is tilted forwardly, it comes into contact with an emboss pressed stopper **118** on the base plate **101**. A plate lever **119** is pivotable about the locking pin **110** of the upper arm **108**. The upper arm **108** has a stopper **120** projecting therefrom. The stopper **120** is designed to contact with the side edge of the lower arm **102** when the upper arm is tilted forwardly. A walk-in lever **121** is pivotally supported by the pivot **103** for pivotal movement thereabout. The walk-in lever **121** has an integrally formed actuation lever section **122** which is oriented in opposition to the leg **119** of the lock release lever **116**. The walk-in lever **121** is connected to an actuation wire **123** which extends through a flexible guide tube **125**, end of which is secured to the seat cushion frame by means of a fastening bracket **124**. Through the actuation wire **123**, the walk-in lever **121** is connected to a walk-in mechanism **F**.

An operation lever **126** is pivotable about the shaft **103**. The operation lever **126** has a lever section **128** which has one end mounted thereon a manual gripper handle **127**. The operation lever **126** is also provided with a foot pedal **129**. A return spring **130** is provided between the operation lever **126** and a holder plate **131** for biasing the operation lever in counterclockwise direction in **Fig. 7**. A tooth member **132** is disposed between the base plate **101** and the holder plate **131** and pivotable about a pivot **133**. The tooth member **132** has a locking tooth **135**. The locking tooth **135** is designed for engagement with a locking tooth **134** formed on the outer periphery of the lower arm **102**. A pin **136** extends from a swing lever **143** and extends through an elongated opening **138** formed through the holder plate **131**. Furthermore, the pin **136** extends through an elongated opening **137** of the operation lever **126**. A cam member **139** is provided for pivotal movement about a shaft **140** on the base plate **101**. The cam member **139** is formed a leg **142** which is engageable with a recess **141** of the tooth member **132**. The swing lever **143** is connected with the cam member **139** via an emboss section **144** to be formed into crank shaped configuration as assembled together with the cam member **139**. The swing lever **143** is pivotable about a pivot **140** together with the cam member **139**. The pin **136** which extends though the elongated opening **137** is extended from the swing lever **143**.

A swing lever **146** is pivotable with a common pivot of the tooth member **132**, at one end. The other end of the swing lever **146** is formed into a configuration adapted to contact with the pin **116** of the catching lever **111**. The swing lever **146** is formed with an elongated opening **148** which is engageable with a projection **149** on the operation lever **112**.

It should be appreciated that the attached drawings show the walk-in mechanism in the second embodiment. However, it should be appreciated that the construction of the walk-in mechanism in the second embodiment is identical to that illustrated in **Fig. 4**. Therefore, all elements of the walk-in mechanism are represented by the reference numerals "100" greater than the first embodiment. Therefore, it should be appreciated that the elements are of the same construction and function as that of the first embodiment having the same number to the lower two digit of figures in this embodiment.

A stationary damper housing **150** is secured on the lower arm **102**. The stationary damper housing **150** serves as stopper for the pivot **112** of the catching lever **111**. A rubber damper **151** is housed within the stationary damper housing **150**. The rubber damper **151** is frictionally engageable with the side face of the upper arm **108**.

In the operation of the aforementioned second embodiment of the automotive structure, the seat back reclining mechanism **E** can be operated through the operation lever **126**. Namely, by pulling up the operation lever **126** to the uppermost position **126a** in clockwise direction in **Fig. 2**, the swing lever **143** is pivotally moved about the pivot **140** via the pin **136**. According to pivotal movement of the swing lever **143**, the cam member **139**, which is integrated with the swing lever and engages the leg **142** with the recess **141** of the tooth member **132**, pivotally moves to cause clockwise rotation of the tooth member **132** about the pivot **133**. By this pivotal movement, the locking engagement between teeth **134** and **135** is released. By this, the lower arm **102** is permitted to pivot about the pivot **103**. At this position, the force of the spiral spring **106** becomes active to cause forward pivotal movement of the seat back **B**. However, since the spring force of the spiral spring **106** is not too strong, the seat back **B** will stop moving forward on contacting a seat occupant's back. On the other hand, by pushing the seat back **B** against the force of the spiral spring **106**, the occupant can tilt the seat back rearwards to increase the reclining angle. When the operation lever **126** is released from its upward position, it is returned to the initial position by the spring force of the spring **130**. Then, the pin **136** causes clockwise pivotal movement of the swing lever **143**. As a result, the cam member **139** pivots in the clockwise direction to release the leg **142** from the recess **141** of the tooth member **132**. Therefore, the tooth member **132** pivots counterclockwise to cause engagement between the teeth **134** and **135**. Therefore, the lower arm **102** is locked at the selected position.

It should be appreciated that with the shown construction, the seat back reclining mechanism permits reclining adjustment between the neutral position **P** and a fully reclined position **Q**.

When walk-in mechanism **F** is to be used for permitting the rear seat passenger to pass therethrough, the operation lever **126** is pulled upwardly or the foot pedal **129**. By this, the operation lever **126** is pivoted about the pivot **310** in clockwise direction. Accordingly, the locking engagement between the teeth **134** and **135** is released. Therefore, the lower arm **102** becomes free from the locking engagement. Therefore, the lower arm **102** is pivoted by means of the spiral spring **106**. As can be appreciated, since the walk-in mechanism **F** is operable in absence of the seat occupant, the lower arm **102** is inclined or tilted forwardly. At the same time, the pin **105** is pivotally moved along the arc shaped elongated slot **104** of the lower arm **102**. By inclination of the lower arms forwardly, the plate lever **119** comes into contact with the lever section **122** of the walk-in lever **121** for causing latter to pivot in counterclockwise direction. By this, the actuation wire **123** is pulled for a predetermined direction to pull the locking lever **56** in lock releasing position for causing forward shifting the movable rail with the seat structure.

On the other hand, when the seat back **B** is to be placed at the folded position for placing the back side of the seat back substantially in horizontal, the operation lever **126** is initially pulled up to the uppermost position **126a** as set forth above for causing forward inclination. At this position, the swing lever **146** is depressed by the pin **116** of the catching lever **111** so as to be maintained in counterclockwise pivoted position. By this, the operation lever **126** is maintained to the uppermost position **126a**. On the other hand, the pin **116** of the catching lever **111** comes into contact with the stopper **118**. As a result, the catching lever **11** is slightly pivoted in clounterclockwise direction. Therefore, the locking pin **110** and the locking pin receptable recess **114** of the catching lever **111** which are placed in incomplete engagement state by initially pulling the operation lever **126** in uppermost position **126a**, are released. By this, the upper arm **108** becomes free to pivot about the pivot **109**.

With the shown construction, the catching lever **111** is designed for slight pivotal movement according to frontwardly tilting movement of the lower arm **102** and maintain the angle between the axes **a** and **b** smaller than or equal to 90° , the locking pin **110** becomes easily released from locking engagement with the catching lever **111**. Therefore, despite of the force exerted on the catching lever **111** for depressing the upper arm **108** onto the rubber damper **151**, the operational force required for releasing locking engagement between the locking pin **110** and the catching lever **111** becomes small.

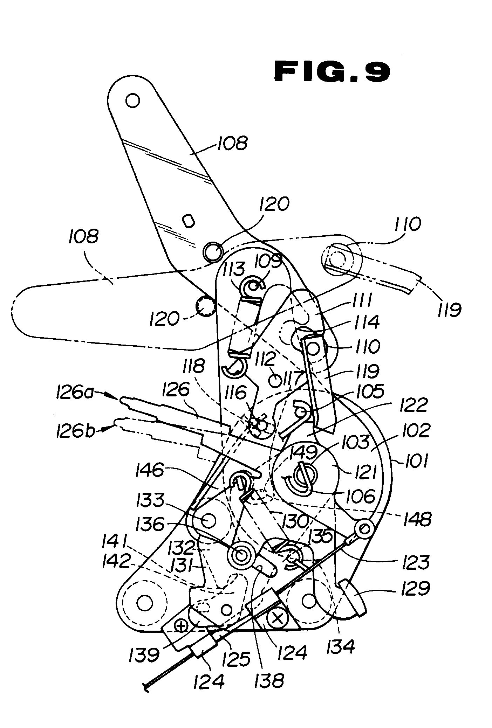

By pushing the seat back **B** frontwardly into the folded position, the upper arm **108** pivots about the pivot **109** in counterclockwise direction. Then, as shown by phantom line in **Fig. 9**, the locking engagement between the plate lever **119** and the lever section **122** of the walk-in lever **121** is released. Therefore, the walk-in lever **121** is forced into pivotal motion by the spring force of the spring **154** via the wire **123**, in clockwise direction. Therefore, the walk-in mechanism **D** is again placed into locking state. Therefore, the movable rail with the seat cushion is locked to the stationary lever at forwardly shifted position. Therefore, the seat placed at the folded position can be stably maintained.

For returning the seat back **B** from the folded position to the normal position, the upper arm **108** with the seat back is pivoted in clockwise direction, as shown in **Fig. 7**. The locking pin **10** comes into engagement with the locking pin receptacle recess **114** of the catching lever **111** for causing integrally locking of the lower and upper arms **102** and **108**.

Then, the movable rail of the seat slide **152** is shifted rearwardly on the stationary rail. Simultaneously, the tilt angle of the seat back **B** is adjusted to the desired position in the manner discussed with respect to the operation of the seat back reclining mechanism. As desired, the tooth **135** of the tooth member **132** and the tooth **134** of the lower arm **102** come into engagement. Therefore, the seat back **B** is fixedly maintained at the selected angular position as illustrated by **P**.

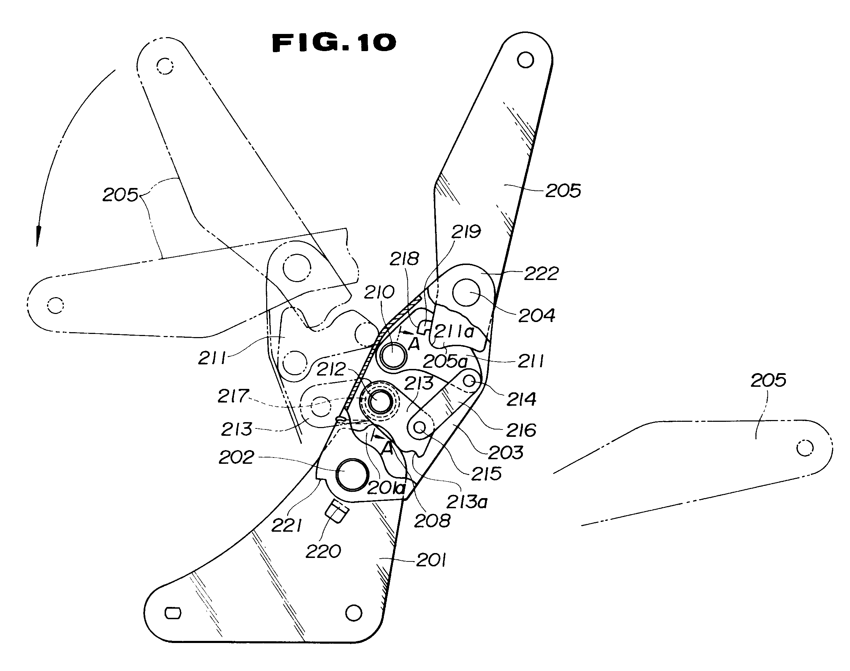

**Figs. 10** through **13** shows a seat back hinge structure which is applicable for pivotally supporting the seat back **B** on the seat cushion **A** at the side opposite to that where the preferred embodiments of the seat back adjusting mechanism is provided.

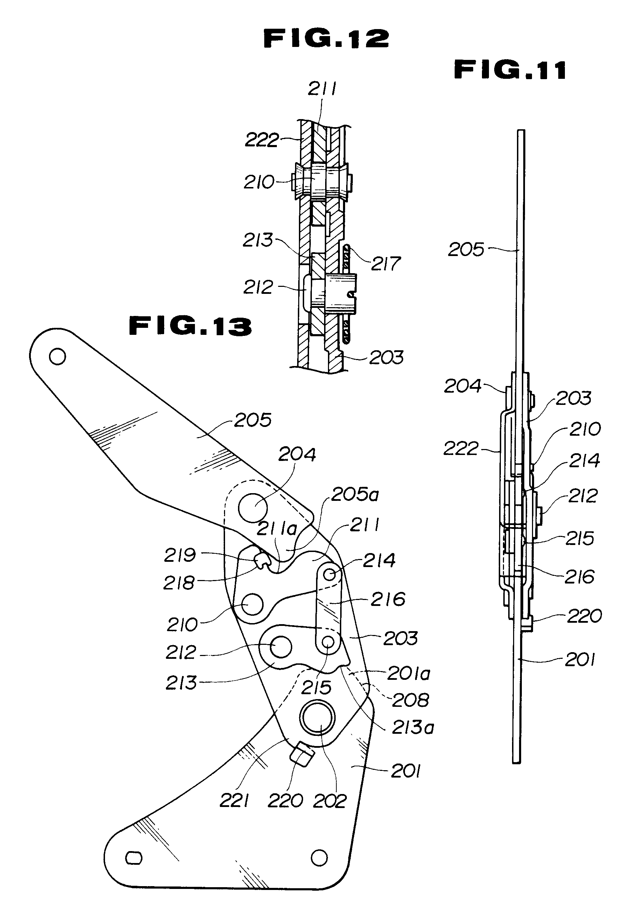

As shown in **Figs. 10** and **11**, a base plate **201** is rigidly fixed on the seat cushion frame. A lower arm **203** is pivotally mounted on the base plate **201** for pivotal movement about a pivot **202**. An upper arm **205** is pivotably connected to the upper end of the lower arm **203** via a pivot **204**. Upper and lower latches **211** and **213** are provided at upper and lower ends of the lower arm **203**. The upper latch **211** is pivotable about a pivot **210**. Similarly, the lower latch **213** is pivotable about a pivot **212**. A link plate **216** is provided between the upper and lower latches **211** and **213**. The link plate **216** pivotable about pivot pins **214** and **215** respectively projecting from the upper and lower latches **211** and **213**. The upper arm **205** is formed with an extension **205a** engageable with a recess **211a** of the upper latch **211**. The lower latch **213** is formed with a recess **213a** for receiving an extension **201a** formed on the upper edge of the base plate **201**. The lower latch **213**.

The lower latch **213** is designed to place the pivoting center for interengagement between the extension **201a** and the recess **213a**, and also the lower latch **213** may also be positioned so as to disengage the extension **201a** and the recess **213a,** as shown in **Figs. 10** and **13**. The lower latch **213** is normally biased clockwise by means of a spring **217**. On the other hand, the upper latch **211** is formed with a cut-out **218**. An elastic member **219**, such as a rubber member, is secured in the cut-out **218**. The elastic member **219** projects to contact the side face of the upper arm **205** frictionally. A stopper **220** is provided on the base plate **201** for limiting the pivoting angular of the lower arm **203**. The lower arm **203** is formed with a stopper projection **221** to abut against the stopper **220**.

The whole structure of the hinge is covered by a holder **222**.

In the shown construction, when the seat back **B** is operated into the folded position, the lower arm **203** follows pivotal movement of the seat back to be pivoted about the pivot **202** in the counterclockwise direction as seen in **Figs. 10** and **13**. Pivotal movement of the lower arm **203** is limited by the abutting of the stopper projection **221** onto the stopper **220**. At this position, the lower latch **213** slides on the guide edge **208** of the base plate **201** to establish engagement between the extension **201a** and the recess **213a**. At this position, the lower latch **213** pivots about the pivot **212**. By pivotal movement of the lower latch **213**, the link plate **216** drives the upper latch **211** in clockwise direction about the pivot **210**. By this, engagement between the recess **211a** and the extension **205a** is released. Therefore, the upper arm **205** is pivoted about the pivot **204** to be placed at substantially horizontal position.

On the other hand, when the seat back is returned to the normal position, the seat back is pulled in the clockwise direction. Then, the extension **205a** of the upper arm **205** comes into engagement with the recess **211a** of the upper latch **211**. Therefore, the upper latch **211** pivots about the pivot **210** in the counterclockwise direction. By this, the lower latch **213** is driven to pivot counterclockwise about the pivot **212** via the link plate **216**. Then, the extension **201a** of the base place **201** is released from the recess **213a** of the lower latch **213**. Therefore, the lower latch **213** becomes movable along the guide edge **208** on the base plate **201**. Therefore, the seat back is maintained at the desired reclining position.

## Claims

1. A hinge structure for an automotive seat which is operable for selecting a seat back (B) reclining position for said seat at a first position, for inclining forwardly for providing space for a passenger to pass thereby at a second position, and for orienting said seat back (B) substantially horizontally at a third position, said hinge structure comprising: a base plate (201) secured to a seat cushion (A) of said automotive seat; a lower arm (203) pivotally mounted on said base plate (201); an upper arm (205) secured to said seat back (B) and pivotably connected to said lower arm (203); and latch means pivotally mounted on said lower arm and engageable with said upper arm (205) and said base plate (201); characterised in that said latch means comprises an upper latch (211) pivotally mounted on said lower arm (203) and engageable with said upper arm (205), a lower latch (213) engageable between said base plate (201) and said lower arm (203), and a link (216) cooperably connecting said upper and lower latches (211, 213); and in that an elastic member (219) is mounted on said upper latch (211) for elastic contact with said upper arm (205).

2. An automotive seat assembly including a seat cushion (A) and a seat back (B), said seat back (B) being operable for selection of a seat back reclining angle in a first position, for forward inclination for allowing passenger access in a second position, and for being oriented in fully forward, substantially horizontal position in a third position, said seat assembly comprising: a base plate (1) fixed to said seat cushion (A); a lower arm (2) pivotably supported on said base plate (1); an operation lever (26); an upper arm (8) rigidly fixed to a seat back (B) of said seat; a locking pin (10) extending from one end of said upper arm (8); and a catching lever (11) pivotably mounted on said lower arm (2) and releasably engaging with said locking pin (10) of said upper arm (8); characterised by said lower arm (2) being biased in a predetermined pivotal direction by a spring (6); said operation lever (26) being provided for pivotal movement with said lower arm (2); by a tooth member (32) cooperable with said operation lever (26) for releasably establishing locking engagement with said lower arm (2); a swing lever (43) for pivotally moving said tooth member (32) for establishing and releasing locking engagement with said lower arm (2); and a link lever (47) associated with said catching lever (11) for causing pivotal movement thereof, said link lever (47) being cooperably connected to said swing lever (42).

3. An automotive seat structure as claimed in claim 2, comprising a walk-in mechanism (F) including seat sliding means (52 - 54) for shifting said seat back and forth, said walk-in mechanism (F) including a seat lock mechanism (55, 56) for locking said seat sliding means (52 - 54), said walk-in mechanism including a walk-in lever (21) associated with said operation lever (26) for synchronizing release of said seat lock mechanism (55, 56) locking said seat sliding means with manual operation of said operation lever (26) for moving said seat back (B) to said second position.

4. An automotive seat structure as claimed in claim 2 or claim 3, comprising an elastic member (51) associated with said second arm (8) active to positionally maintain said second arm (8) by frictional engagement with said first arm when said second arm (8) is not operatively engaged.

5. An automotive seat structure as claimed in any one of claims 2 to 4, wherein said operation lever (26) is integrally formed with a foot pedal (29).

6. An automotive seat structure as claimed in any one of claims 2 to 5, comprising third locking means (119, 122) active to lock said second arm (8) while said seat back (B) is placed at said third position.

7. An automotive seat structure as set forth in claim 2, wherein said operation lever (26) associated with said lower arm (2) for pivotal movement therewith has first and second components selectively operable to a first operational position for releasing engagement of said lock pin (10) and said locking lever (11) for permitting pivotal movement of said upper arm (8) with said seat back (B) into said second position, and at least one of said first and second components being further operable to a second operational position to release locking of said lower arm (2) for establishing said third position of said seat back (B) while engagement between said locking pin (10) and said locking lever (11) is released.

## Patentansprüche

1. Gelenkkonstruktion für einen Autositz, die geeignet ist, eine Sitzlehnen(B)-Neigestellung für den Sitz in einer ersten Stellung zu wählen, sie in einer zweiten Stellung nach vorn zu neigen, um für einen Passagier zum Einsteigen Platz zu schaffen, und die Sitzlehne (B) in einer dritten Stellung im wesentlichen horizontal auszurichten, wobei diese Gelenkkonstruktion umfaßt: eine Grundplatte (201), die an der Sitzfläche (A) des Autositzes befestigt ist; einen unteren Arm (203), der schwenkbar an der Grundplatte (201) befestigt ist; einen oberen Arm (205), der an der Sitzlehne (B) befestigt ist und schwenkbar mit dem unteren Arm (203) verbunden ist; und eine Verriegelungseinrichtung, die schwenkbar am unteren Arm befestigt ist und mit dem oberen Arm (205) und der Grundplatte (201) in Eingriff bringbar ist; dadurch gekennzeichnet, daß die Verriegelungseinrichtung enthält: einen oberen Riegel (213), der schwenkbar am unteren Arm (203) befestigt ist und mit dem oberen Arm (205) in Eingriff steht, einen unteren Riegel (213), der zwischen der Grundplatte (201) und dem unteren Arm (203) einfügbar ist, und einen Verbinder (216), der den oberen und unteren Riegel (211, 213) zusammenwirkend verbindet; und dadurch, daß ein elastisches Element (219) am oberen Riegel (211) befestigt ist, das dazu bestimmt ist den oberen Arm (205) elastisch zu berühren.

2. Autositzanordnung enthaltend eine Sitzfläche (A) und eine Sitzlehne (B), wobei die Sitzlehne (B) zur Wahl eines Sitzlehnen-Neigungswinkels in einer ersten Stellung, zum Vorwärtsneigen in einer zweiten Stellung, um einem Passagier das Einsteigen zu ermöglichen, und zum Ausrichten ganz nach vorne, in eine im wesentlichen horizontalen Position in einer dritten Stellung geeignet ist, wobei die Sitzanordnung enthält: eine Grundplatte (1), die an der Sitzfläche (A) befestigt ist; einen unteren Arm (2), der schwenkbar an der Grundplatte (1) befestigt ist; einen Bedienungshebel (26); einen oberen Arm (8), der starr an der Sitzlehne (B) des Sitzes befestigt ist; einen Arretierstift (10), der von einem Ende des oberen Armes (8) hervorsteht; und einen Sperrhebel (11), der schwenkbar am unteren Arm (2) befestigt ist und lösbar mit dem Arretierstift (10) des oberen Armes (8) in Eingriff steht; dadurch gekennzeichnet, daß der untere Arm (2) in eine bestimmte Schwenkrichtung durch eine Feder (6) vorgespannt ist; daß der Bedienungshebel (26) für eine Schwenkbewegung mit dem unteren Arm (2) bestimmt ist; gekennzeichnet durch ein Zahnelement (32), das mit dem bedienungshebel (26) zusammenwirkt, um eine lösbare Arretierverbindung mit dem unteren Arm (2) herzustellen; einen Schwenkhebel (43), der dazu bestimmt ist, das Zahnelement (32) zu schwenken, um eine Arretierverbindung mit dem unteren Arm (2) herzustellen und zu lösen; und einen Verbindungshebel (47), der mit dem Sperrhebel (11) in Verbindung steht, um eine Schwenkbewegung desselben zu bewirken, wobei der Verbindungshebel (47) für gemeinsame Wirkungsweise mit dem Schwenkhebel (43) verbunden ist.

3. Autositzkonstruktion nach Anspruch 2, enthaltend einen Einstiegsmechanismus (F), der eine Sitzverschiebeeinrichtung (52-54) enthält, die dazu bestimmt ist, den Sitz nach vorn und zurück zu schieben, wobei der Einstiegsmechanismus (F) enthält: einen Sitzarretiermechanismus (55, 56) , der dazu bestimmt ist, die Sitzverschiebeeinrichtung (52-54) zu arretieren, einen Einstiegshebel (21) der mit dem Bedienungshebel (26) in Verbindung steht, um das Lösen des Sitzarretiermechanismus (55, 56) zu synchronisieren und mit manueller Bedienung des Bedienungshebels (26) die Sitzverschiebeeinrichtung zu arretieren, um die Sitzlehne (B) in die zweite Stellung zu bewegen.

4. Autositzkonstruktion nach Anspruch 2 oder 3 enthaltend ein elastisches Element (51), das dem zweiten Arm (8) zugeordnet ist, um den zweiten Arm (8) durch Reibschluß in Position zu halten, wenn der zweite Arm (8) nicht arretiert ist.

5. Autositzkonstruktion nach einem der Ansprüche 2 bis 4, bei der der Bedienungshebel (26) zusammen mit einem Fußpedal (29) ausgebildet ist.

6. Autositzkonstruktion nach einem der Ansprüche 2 bis 5, enthaltend eine dritte Arretiereinrichtung (119, 112), die dazu bestimmt ist, den zweiten Arm (8) zu arretieren, während sich die Sitzlehne (B) in einer dritten Stellung befindet.

7. Autositzkonstruktion nach Anspruch 2, bei der der Bedienungshebel (26), der dem unteren Arm (2) zugeordnet ist, um mit diesem zu schwenken, ein erstes und zweites Bauteil hat, die wahlweise für eine erste Funktionsstellung bedienbar sind, um die Verbindung von Arretierstift (10) und Sperrhebel (11) zu lösen, um eine Schwenkbewegung des oberen Armes (8) mit der Sitzlehne (B) in eine zweite Stellung zu erlauben, und wenigstens eines des ersten und zweiten Bauteils für eine zweite Funktionsstellung bedienbar ist, um die Arretierung des unteren Armes (2) zu lösen, um die dritte Stellung der Sitzlehne (B) einzurichten, während die Verbindung zwischen dem Arretierstift (10) und dem Sperrhebel (11) gelöst wird.

## Revendications

1. Structure d'articulation pour un siège d'automobile qui est actionnable pour choisir une position d'inclinaison du dossier de siège (B) pour ledit siège dans une première position, pour une inclinaison vers l'avant afin de réaliser un espace pour le passage d'un passager dans une deuxième position et pour orienter ledit dossier de siège (B) de façon sensiblement horizontale dans une troisième position, ladite structure d'articulation comprenant : une plaque de base (201) fixée sur un coussin de siège (A) dudit siège d'automobile; un bras inférieur (203) monté de façon pivotante sur ladite plaque de base (201) ; un bras supérieur (205) fixé audit dossier de siège (B) et relié de façon pivotante audit bras inférieur (203) ; et un moyen de loquet monté de façon pivotante sur ledit bras inférieur et pouvant être mis en prise avec ledit bras supérieur (205) et ladite plaque de base (201) ; caractérisée en ce que ledit moyen formant loquet comprend un loquet supérieur (211) monté de façon pivotante sur ledit bras inférieur (203) et pouvant être mis en prise avec ledit bras supérieur (205), un loquet inférieur (213) pouvant s'engager entre ladite plaque de base (201) et ledit bras inférieur (203) et une bielle (216) établissant une coopération entre lesdits loquets supérieur et inférieur (211, 213) ; et en ce qu'un élément élastique (219) est monté sur ledit loquet supérieur (211) en vue d'un contact élastique avec ledit bras supérieur (205).

2. Ensemble formant siège d'automobile incluant un coussin de siège (A) et un dossier de siège (B), ledit dossier de siège (B) pouvant être actionné pour choisir un angle d'inclinaison du dossier de siège dans une première position, pour une inclinaison vers l'avant pour permettre l'accès d'un passager dans une deuxième position, et pour être orienté dans la position tout à fait en avant, sensiblement horizontale, dans une troisième position, ledit ensemble de siège comprenant: une plaque de base (1) fixée audit coussin de siège (A) ; un bras inférieur (2) supporté de façon pivotante sur ladite plaque de base (1) ; un levier d'actionnement (26) ; un bras supérieur (8) fixé rigidement sur un dossier de siège (B) dudit siège ; un axe de verrouillage (10) s'étendant depuis une extrémité dudit bras supérieur (8) ; et un levier d'arrêt (11) monté de façon pivotante sur ledit bras inférieur (2) et venant en prise amovible avec ledit axe de verrouillage (10) dudit bras supérieur (8) ; caractérisé en ce que ledit bras inférieur (2) est sollicité dans une direction de pivotement prédéterminée par un ressort (6) ; en ce que ledit levier d'actionnement (26) étant prévu pour un mouvement pivotant avec ledit bras inférieur (2) ; par un élément denté (32) coopérant avec ledit levier d'actionnement (26) pour établir une prise de verrouillage relâchable avec ledit bras inférieur (2) ; un levier pivotant (43) pour déplacer de façon pivotante ledit élément denté (32) pour une mise en et hors prise avec ledit bras inférieur (2) ; et un levier de bielle (47) associé audit levier d'arrêt (11) pour provoquer le mouvement pivotant de celui-ci, ledit levier de bielle (47) étant relié de façon coopérante audit levier pivotant (42).

3. Structure de siège d'automobile selon la revendication 2, comprenant un mécanisme facilitant l'entrée (F) incluant des moyens de coulissement de siège (52-54) pour déplacer ledit siège vers l'arrière et vers l'avant, ledit mécanisme facilitant l'entrée (F) incluant un mécanisme de blocage de siège (55, 56) pour bloquer ledit moyen de coulissement de siège (52-54), ledit mécanisme facilitant l'entrée incluant un levier facilitant l'entrée (21) associé audit levier d'actionnement (26) pour synchroniser le relâchement dudit mécanisme de blocage de siège (55, 56) bloquant ledit moyen de coulissement de siège en actionnant manuellement ledit levier d'actionnement (26) afin d'amener ledit dossier de siège (B) dans ladite deuxième position.

4. Structure de siège d'automobile selon la revendication 2 ou la revendication 3, comprenant un élément élastique (51) associé audit deuxième bras (8) intervenant pour maintenir ledit deuxième bras (8) en position par une mise en prise de friction avec ledit premier bras lorsque ledit deuxième bras (8) n'est pas opérationnellement engagé.

5. Structure de siège d'automobile selon l'une des revendications 2 à 4, dans laquelle ledit levier d'actionnement (26) est réalisé intégralement avec une pédale (29).

6. Structure de siège d'automobile selon l'une des revendications 2 à 5, comprenant un troisième moyen de verrouillage (119, 122) intervenant pour bloquer ledit deuxième bras (8) pendant que ledit dossier de siège (B) est placé dans ladite troisième position.

7. Structure de siège d'automobile selon la revendication 2, dans laquelle ledit levier d'actionnement (26) associé audit bras inférieur (2) en vue d'un mouvement pivotant avec celui-ci, comporte des premier et deuxième composants actionnables sélectivement vers une première position opérationnelle pour une mise hors prise dudit axe de verrouillage (10) et dudit levier de blocage (11) pour permettre un mouvement de pivotement dudit bras supérieur (8) avec ledit dossier de siège (B) dans ladite deuxième position, et au moins un parmi lesdits premier et deuxième composants pouvant être actionnés en outre vers une deuxième position opérationnelle pour relâcher le verrouillage dudit bras inférieur (2) afin d'établir ladite troisième position dudit dossier de siège (B) pendant que la prise entre ledit axe de verrouillage (10) et ledit levier de blocage (11) est relâchée.
